# EUROPÄISCHE PATENTSCHRIFT

(11) **EP 1 900 767 B1**
(45) Veröffentlichungstag und Bekanntmachung des Hinweises auf die Patenterteilung: **31.03.2010**
(21) Anmeldenummer: 07114899.3
(22) Anmeldetag: 24.08.2007
(51) Int. Cl.: C08J 9/00, C08J 9/12

(54) **Mikrowellenschaum**
Microwave foam
Mousse expansée par micro-ondes

(30) Priorität: 12.09.2006 DE 102006042687
(43) Veröffentlichungstag der Anmeldung: 19.03.2008
(73) Patentinhaber: Wacker Chemie AG, 81737 München (DE)
(72) Erfinder: Weidinger, Jürgen, 84570, Polling (DE)
(74) Vertreter: Gössmann, Christoph Tassilo

(56) Entgegenhaltungen:
- US-A- 3 848 038
- US-A- 4 026 844
- US-A- 4 980 384
- US-A- 5 438 081

## Beschreibung

Die Erfindung betrifft eine Zusammensetzung, um Schäume zu erzeugen.

Polysiloxan (Silicon) haltige Elastomere und thermoplastische Elastomere sowie Harze sind aufgrund ihrer chemischen Struktur nicht mikrowellenaktiv. Daher sind sie -ohne spezielle Additivierung bzw. Füllung- durch Mikrowellenstrahlung weder heizbar noch vernetzbar (vulkanisierbar). Durch Verwendung von mikrowellenaktiven Füllstoffen, z.B. Magnetit (vgl. z.B. DE 10 2004 053 310 A1, DE 10 2004 053 309 B3), lässt sich eine rasche Erhitzung des Kautschuks bzw. der Rohmassen und damit unter Zuhilfenahme geeigneter Vulkanisationsadditive (z.B. Peroxide oder Edelmetallkatalysatoren) eine Vernetzung zum Elastomer oder zum Harz erreichen.

Die Verwendung von Mikrowellen zum Erhitzen von Kunststoffen ist im Bereich von Thermoplasten gut bekannt (z.B. EP 0 351 544, DE 39 23 913 A1) und wird auch im Bereich organischer Elastomere (z.B. DE 692 07 040 T2) oder allgemein im Polymerbereich (z.B. DE 689 18 648 T2, DE 43 34 453 C2))eingesetzt. Diese Methode war aus oben genanntem Grund im Bereich von Polysiloxan-Kunststoffen jedoch wenig (US 4980384, US 4460713) bis nicht verbreitet. Mit allen im Stand der Technik beschriebenen Verbindungen lässt sich kein homogener Schaum herstellen.

Beim klassischen Schäumen von z.B. Siloxan haltigen Polymeren wird die Temperatur, welche zur Vulkanisation wie auch zur Aktivierung (Zerfall) von z.B. metastabilen Schaum-Treibmitteln führt, mit Hilfe von externen Heizelementen unterschiedlichster Art von Außen in die zu schäumende Formulierung eingebracht.

Dadurch bestehen folgende Negativfaktoren für das herzustellende Schaumteil:
Problem der kritischen Balance von Vernetzung und Expansion (d.h. kleines Verarbeitungsfenster, wenig Eingriffsmöglichkeiten);
- Problem der Oberfläche (Gefahr des Durchbrechens von Blasen durch die Oberflächenhaut, wenn diese nicht adäquat durchvernetzt sind);
-Problem der inhomogenen Schaumstruktur (Erzeugung großer und kleiner Blasen, aber auch von Bereichen ohne Blasenbildung);
- Problem der Dimensionsstabilität (keine reproduzierbare Form und keine exakte Größeneinstellung des Teils, u.a. durch o.a. Risiken);
-Problem des gehemmten Wärmetransports (entstehender Schaum leitet die Wärme noch schlechter von außen nach innen als die Rohmasse, d.h. es kommt zum Nachlassen der Expansion im Inneren und/oder zur Untervulkanisation).

Aus diesen Faktoren leiten sich die dem Fachmann bekannten Nachteile des klassischen temperaturindizierten Schäumens von Siloxan haltigen Massen ab:
- metastabiler bis instabiler Gesamtprozess;
- eingeschränkte Wahl von Verarbeitungsmethoden im Vergleich zu Thermoplasten, Elastomeren etc.;
- eingeschränkte Wahl von Verarbeitungsparametern;
- keine Herstellung sehr maßhaltiger Teile oder von Teilen mit immer gleicher homogener Schaumstruktur möglich;
- aufwändige und teure Ausrüstung nötig;
- enormer Aufwand bei Design und Entwicklung von Schaumteilen.

Aufgabe der Erfindung ist es, den Stand der Technik zu verbessern, insbesondere homogene Schäume herzustellen.

Ein Gegenstand der Erfindung ist eine Zusammensetzung aufweisend:
(A) Zumindest eine Verbindung, die organische Reste aufweist, die zur Vernetzung geeignet sind,
(B) zumindest ein Treibmittel, das bei Erwärmung Gas, Dampf oder Rauch freisetzt, Kristallwasser oder Interchalatwasser aufweist,
(C) Magnetit.

Bei den erfindungsgemäßen Zusammensetzungen kann es sich um Einkomponenten-Massen wie auch um Mehrkomponenten-Massen handeln. In letzterem Fall können die Komponenten der erfindungsgemäßen Massen alle Bestandteile in beliebiger Kombination enthalten.

Die (A) Verbindungen, die organische Reste zur Vernetzung aufweisen, weisen bevorzugt Reste mit aliphatischen Kohlenstoff-Kohlenstoff-Mehrfachbindungen auf.

Vorzugsweise handelt es sich bei den Verbindungen, die organische Reste aufweisen, die zur Vernetzung geeignet sind, um peroxidisch vernetzende, schwefelvernetzende, bisphenolvernetzende organische oder platinkatalysiert additionsvernetzende Verbindungen.

Wie zum Beispiel Isoprene, Nitrilpolymere, Polybutadiene.

Vorzugsweise handelt es sich bei der erfindungsgemäßen Zusammensetzung bei dem Bestandteil (A) um eine aliphatisch ungesättigte Organosiliciumverbindung, wobei alle bisher in unvernetzten und vernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Das Molekulargewicht des Bestandteils (A) kann in weiten Grenzen variieren, etwa vorzugsweise zwischen 10² und 10⁶ g/mol, bevorzugt 10³ bis 10⁵ g/mol

So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}**,** R**¹**R₂SiO_{1/2}**,** R**¹**RSiO_{2/2} und R₂SiO_{2/2} Zusammengesetzt, wobei R und R¹ gleiche oder verschiedene organische Gruppen darstellen können, wie Methyl, Propyl, Trifuoropropyl, Vinyl, Phenyl, oder Substituenten wie OR³, NR³₂, wobei R³ selbst wiederum organische Gruppen oder Substituenten wie beschrieben sein können. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Es können auch Mischungen unterschiedlicher, den Kriterien des Bestandteils (A) genügende Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Die Verbindungen, die organische Reste aufweisen, die zur Vernetzung geeignet sind, werden in Mengen von vorzugsweise 1 bis 99 Gew.% bevorzugt 20 bis 70 Gew.% bezogen auf die gesamte Zusammensetzung eingesetzt.

Als Treibmittel (B) kommen alle Gase in Frage, welche physikalisch bei Normaldruck oder erhöhtem Druck in der Matrix löslich oder zumindest temporär in diese einbringbar sind, sowie chemische Verbindungen, welche bei Temperatureinwirkung Gas freisetzen, wie Azoverbindungen (z.B. AIBN, Azoisobutyronitrile, setzen Stickstoff frei), Carbonate (wie Natriumcarbonat, setzen CO₂ frei), Peroxide (wie BaO₂, setzen Sauerstoff frei), sowie Verbindungen, welche in Hohlkugeln oder Hohlräumen eingeschlossene Gase enthalten, oder bevorzugt flüchtige Flüssigkeiten enthaltende Treibmittel, welche eine Flüssigkeit oder ein Gas entweder in dispergierter und/oder eingeschlossener Form (als Kristall- oder Interchalatflüssigkeit bzw. eingeschlossenes Gas) enthalten und bei Erwärmung durch Reaktion oder rein physikalisch in Gasform freisetzen (wie N₂, CO₂, O₂, Wasserdampf).

Die an dem Treibmittel (B) gebundenen Flüssigkeitsmoleküle werden ausgewählt aus der Gruppe enthaltend organische- und anorganische Lösungsmittel. Bevorzugt werden diese Lösungsmittel ausgewählt aus der Gruppe enthaltend Wasser, Alkohole, Amine, THF, Pentan, Hexan, Toluol und Ether oder Mischung davon. Besonders bevorzugtes Flüssigkeitsmolekül ist Wasser.

Je nach Charakter des Treibmittels (B) können die Flüssigkeitsmoleküle durch unterschiedlichste Arten an das Treibmittel gebunden sein, beispielsweise rein physikalisch eingeschlossen, adsorbiert, kovalent gebunden, komplexiert oder in einer anderen Weise chemisch gebunden.

All diesen Flüssigkeiten gemein ist ihre potenzielle Flüchtigkeit bei höheren Temperaturen, im Falle von Kristallflüssigkeit beim Aufbrechen des Gitters und bei Interchalatflüssigkeit bei Erreichen der Energieschwelle zur Lösung der Bindungen. Dies bedeutet, dass bei richtiger Wahl des Treibmittels (B) ein Schäumverhalten beispielsweise bei den für die Elastomerverarbeitung üblichen Temperaturen, normalerweise 100-200°C, eingestellt werden kann.

Bei richtiger Wahl dieser Interchalat- oder Kristallflüssigkeit enthaltenden Treibmittel (B), ergeben sich, gegenüber den meisten bekannten Treibmittelsystemen, viele Vorteile für den Einsatz in transparenten, opaken oder gefärbten und sogar, bei entsprechender Wahl der Flüssigkeit, lebensmittelgeeigneten Kunststoff- und Elastomermassen. Zum ersten weisen diese ausgezeichnete mechanische Belastbarkeit auf, wie beispielsweise der Druckverformungsrest bei Gummis, die aufgrund der gemischtzelligen, größtenteils offenzelligen Struktur sehr gutes Rückstellvermögen zeigen. Weiterhin besteht eine hohe Allgemeinbeständigkeit der erfindungsgemäßen schäumbaren Zusammensetzung, da die nicht flüchtigen Rückstände des Treibmittels (B) größtenteils chemisch inert sind und somit keine Wechselwirkung mit der Kunststoffmatix (A) eingehen. Zudem sind sie beliebig einfärbbar, da sie selber meistens farblos sind. Es besteht kein negativer Einfluss auf die Oberflächeneigenschaften wie beispielsweise der Grip, sie sind zudem, bei entsprechender Wahl der Flüssigkeit, für Lebensmittel geeignet und entsprechen den BfR- oder FDA-Vorgaben. Auch sicherheitsrelevante Aspekte sprechen für die erfindungsgemäße schäumbare Zusammensetzung, da sie, bei geeigneter Wahl des Treibmittels, nicht brandfördernd ist und es nicht zur Bildung toxischer Verbrennungsprodukte im Brandfall kommt. Zudem kommt es zu keiner Wechselwirkung mit anderen Formulierungsbestandteilen in der schäumbaren Zusammensetzung.

Bevorzugte Interchalat- und Kristallflüssigkeit ist Wasser. Interchalat- oder Kristallwasser ist zwischen den Schichten beziehungsweise in die Kristallstruktur organischer oder anorganischer Verbindungen eingebundenes Wasser, welches man als so genanntes "Hydrat" in verschiedensten Bindungsverhältnissen findet. Beispielsweise wasserhaltige Zeolithe, Schichtsilicate, Kristallwasser enthaltende Salze, wie beispielsweise im bekannten Gips, wie auch in Proteinen beispielsweise Casein, und klassischen Salzen, beispielsweise Sulfate und Phosphate wie das Glaubersalz und Na₂SO₄ x 10 H₂O, sowie nichtkristalline wasserhaltige Komplexverbindungen. Bevorzugt sind Alkali- und Erdalkalisulfate sowie Alkali- und Erdalkaliphosphate, besonders bevorzugt sind Alkali- und Erdalkaliphosphate, wovon die Alkaliphosphate wiederum bevorzugt sind, von den Alkaliphosphaten ist das Natriumdihydrogenphosphat, das Dinatriumhydrogenphosphat, das Tetranatriumdiphosphat und höher kondensierte Polyphosphate bevorzugt, wovon das Tetranatriumdiphosphat und höher kondensierte Polyphosphate besonders bevorzugt sind.

Ein weiterer Vorteil der erfindungsgemäßen Treibmittel (B) ist das Vorliegen als Feststoff, welcher sehr einfach und ohne zusätzliche Hilfsmittel in der Zusammensetzung dispergiert werden kann. Die eingemischten Treibmittel (B) sind stabil und verändern sich bei entsprechender Lagerung nicht über die Zeit.

Zudem kann die erfindungsgemäße schäumbare Zusammensetzung in beliebiger Kombination mit bekannten Treibmitteln, beispielsweise Carbonate, Stickstoffverbindungen, Wasser- und Alkohol-basierte Treibmittel verwendet werden, wobei die erfindungsgemäße schäumbare Zusammensetzung die Schaum-Endeigenschaften verbessert. Die Treibmittel können daher sowohl als Feststoff eingemischt beziehungsweise vorher gelöst oder angebatcht werden oder direkt in der Matrix vorliegen.

Die erfindungsgemäß eingesetzten Treibmittel sind dem Fachmann bekannt und können z. T. käuflich erworben werden.

Als Komponente C wird Magnetit (formale Formel Fe₃O₄) eingesetzt, wobei es eine mittlere Korngröße mit beliebiger Korngrößenverteilung von 0,1 bis 1000 zum, bevorzugt zwischen 10 und 500 µm, für transparente Formulierungen bevorzugt zwischen 0,1 und 0,4 µm aufweist.

Zur Verbesserung der Einmischbarkeit und der mechanischen Eigenschaften der Endmischung können diese Füllstoffe mit geeigneten Chemikalien behandelt werden, was in Knetern, Mischern, Dissolvern, Autoklaven geschehen kann. Als Agenzien zur Behandlung eignen sich Amine, Alkohole, vor allem jedoch Silane der allgemeinen Zusammensetzung Si[XRₙ]₄, wobei X ein Nichtmetallatom wie C, N, O, P sein kann; R kann ein beliebiger nicht organischer oder organischer Rest sein. Die Verbindung wird so gewählt, dass das Molekül auf die Oberfläche der mikrowellenaktiven Partikel aufzieht und mit diesen eine physikalische oder durch Abspaltung mindestens eines Restes an der Si-X oder der X-R-Bindung eine chemische Verbindung eingeht. Durch die Oberflächenbehandlung mit geeigneten Agenzien wird einerseits eine bessere Dispergierung in der Polymermatrix erreicht, andererseits ist während einer evtl. folgenden Vernetzung auch eine Anbindung durch Vulkanisation möglich.

Magnetit wird in Mengen von 0,1 bis 99 Gew.%, bevorzugt 10 bis 60 Gew.% , besonders bevorzugt 10 bis 30 Gew.%, bezogen auf die gesamte Zusammensetzung, eingesetzt.

Das erfindungsgemäß eingesetzte Magnetit ist dem Fachmann bekannt und kann käuflich erworben werden.

(D) behandelte oder unbehandelte aktive Füllstoffe, bevorzugt pyrogene oder gefällte Kieselsäuren in Mengen von vorzugsweise 0 bis 80 Gew.% bevorzugt 0 bis 50 Gew.%, besonders bevorzugt 0 bis 35 Gew.%, bezogen auf die gesamte Zusammensetzung.

Als Füllstoffe (D) können alle Füllstoffe aus der Gruppe der Silikate eingesetzt werden, die auch bisher in siliconhaltigen Massen eingesetzt worden sind. Beispiele für verstärkende Füllstoffe, die als Komponente (D) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (D) liegt im Bereich von 0 bis 80 Gew.%, vorzugsweise bei 0 bis 50 Gew.-%, besonders bevorzugt bei 0-35 Gew.%, bezogen auf die gesamte Zusammensetzung.

(E) ist ein geeignetes Vernetzungssystem zur Kondensationsvernetzung, peroxidinduzierten Vernetzung oder Edelmetallkomplex-katalysierten Additionsvernetzung in geeigneten Anteilen, sowie

(F) weitere Zuschlagstoffe, wie Stabilisatoren, nicht verstärkende Füllstoffe, wärmeleitfähige Füllstoffe, Pigmente.

Die erfindungsgemäße siliconhaltige Masse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A) verschieden sind, Dispergierhilfsmittel, Lösungsmittel, Haftvermittler, Pigmente, Farbstoffe, Weichmacher, organische Polymere, Hitzestabilisatoren sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente.

Enthalten sein können des weiteren Zusätze (F), die der gezielten Einstellung der Verarbeitungszeit, Anspringtemperatur und Vernetzungsgeschwindigkeit der erfindungsgemäßen Massen dienen, sowie wärmeleitfähige Füllstoffe, die die Effektivität des mikrowelleninduzierten Wärmetransports steigern.

Die erfindungsgemäß eingesetzten Komponenten (D) und (F) sind handelsübliche Produkte bzw. nach in der Chemie gängigen Verfahren herstellbar.

Außer den Komponenten (A) bis (F) können die erfindungsgemäßen Zusammensetzungen noch alle weiteren Stoffe enthalten, die auch bisher zur Herstellung von siliconhaltigen Massen eingesetzt wurden.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als Siliconöle (fluids), RTV-1, RTV-2, LSR und HTV bezeichneten Massen der Fall sein kann. Hinsichtlich der elastomeren Eigenschaften der vernetzten erfindungsgemäßen Siliconmassen wird gleichfalls das gesamte Spektrum umfasst, beginnend bei extrem weichen Silicongelen, über gummiartige Materialien bis hin zu hochvernetzten Siliconen mit glasartigem Verhalten.

Die Herstellung der erfindungsgemäßen siliconhaltigen Massen kann nach bekannten Verfahren erfolgen, wie vorzugsweise beispielsweise durch gleichmäßige Vermischung der einzelnen Komponenten. Die Reihenfolge dabei ist beliebig, vorzuziehen ist jedoch die vorrangige -wenn nötig- Behandlung des Magnetits (C) und seine Vermischung mit der Polymermatrix. Der Füllstoff kann dabei als Feststoff oder als mit geeigneten Agenzien angeteigter Batch zugefügt werden. Die Vermischung erfolgt dabei abhängig von der Viskosität von (A) z.B. mit einem Rührer, in einem Disolver, auf einer Walze oder in einem Kneter. Das Magnetit (C) kann auch in einem organischen Thermoplasten oder thermoplastischen Siliconharz verkapselt werden.

Das Treibmittel (B) kann ebenfalls auf beliebige Art, bevorzugt als Batch, in die Polymermatrix eingemischt werden.

Bei den erfindungsgemäß eingesetzten Komponenten (A) bis (F) kann es sich jeweils um eine einzelne Art einer solchen Komponente, wie auch um ein Gemisch aus mindestens zwei verschiedenen Arten einer solchen Komponente handeln.

Die erfindungsgemäßen Massen können bei Vorhandensein vernetzbarer Gruppen vernetzt (vulkanisiert) werden, wie die bisher bekannten vernetzbaren Massen. Vorzugsweise handelt es sich dabei um Temperaturen von 40 bis 220°C, besonders bevorzugt von 100 bis 190°C, und drucklos oder unter einem Druck von 900 bis 1100 hPa. Es können aber auch höhere oder niedrigere Temperaturen und Drücke angewendet werden, dies hängt von Strahlungsdauer und -frequenz sowie Geometrie und Herstellweise des gewünschten Teils ab.

Ein entscheidender Vorteil der erfindungsgemäßen Massen ist ihre rasche Vernetzbarkeit durch Mikrowellenstrahlung aufgrund des Magnetits (C). Die Vernetzung kann zusätzlich auch photochemisch mit energiereicher Strahlung, wie z.B. sichtbarem Licht mit kurzen Wellenlängen und UV-Licht, oder mit einer Kombination aus thermischer und photochemischer Anregung durchgeführt werden.

Ein weiterer Gegenstand der vorliegenden Erfindung sind Extrudate, Verbund- und Formkörper hergestellt durch Vernetzung und Expansion der erfindungsgemäßen Massen.

Die erfindungsgemäßen Massen sowie die erfindungsgemäß daraus hergestellten Vernetzungsprodukte können für alle Zwecke eingesetzt werden -mit dem Vorteil der schnellen Verarbeitung und vorhandener Mikrowellenabsorption auch am Endteil-, für die auch bisher zu Elastomeren vernetzbare Organopolysiloxanmassen bzw. Elastomere bzw. geschäumte Massen verwendet wurden. Dies umfasst beispielsweise die Siliconbeschichtung bzw. Imprägnierung beliebiger Substrate, die Herstellung von Formteilen, z.B. im Spritzgussverfahren, Vakuumextrusionsverfahren, Extrusionsverfahren, Formgießen und Formpressen, Abformungen, die Verwendung als Dicht- Einbett- und Vergussmassen.

Von besonderem Interesse ist die mikrowelleninduzierte Erwärmung von Siliconelastomeren und Siloxan haltigen thermoplastischen Elastomeren bzw. thermoplastischen Vulkanisaten sowie Harzen durch die Tatsache, dass eine homogene Erwärmung stattfindet, da kein Wärmeeintrag von außen (durch z.B. Heißluft oder eine beheizte Formoberfläche) nach innen, sondern gleichmäßige Wärmeerzeugung im gesamten Material erfolgt.

Diese gleichmäßige Erwärmung ermöglichte die Lösung eines Problems der Silicon-Technologie: Die gleichmäßige Erzeugung von Siloxan-haltigen Schäumen in beliebigen Dicken und Abmessungen. Silicone (Elastomere, thermoplastischee Elastomere und Harze) sind generell schnell vernetzende, also rasch rigide werdende Massen. Da die Vernetzung (Vulkanisation) gegen eine eventuell gleichzeitig ablaufende Expansion arbeitet, ist das Expandieren, also Schäumen, von Siliconmassen ein schwieriger Vorgang.

Die erfindungsgemäßen Massen haben den Vorteil, dass mit ihnen Artikel hergestellt werden können, die zusätzlich zur niedrigen Dichte ein angepasstes Wärmeleitvermögen (bei Verwendung von 0,1 bis 15 Teilen an Magnetit (C): niedrige Wärmeleitfähigkeit; ab 20 Teilen: erhöhte Wärmeleitfähigkeit) und/oder eine durch Mikrowellenstrahlung induzierte Heizbarkeit aufweisen, wie Heizmatten, Dämmplatten, Dämpfungselemente, sowie Schaumteile, welche aufgrund ihres magnetischen Moments z.B. durch Sensoren detektierbar oder magnetisch anregbar sind.

Die erfindungsgemäßen Massen haben den Vorteil, dass sie in einem einfachen Verfahren unter Verwendung leicht zugänglicher Ausgangsstoffe ohne die Gefahr gegenseitiger negativer Beeinflussung und damit wirtschaftlich und sicher hergestellt werden können.

Die erfindungsgemäßen Massen haben den Vorteil, dass sie aufgrund der direkten internen Wärmeerzeugung eine wesentlich schnellere Vulkanisation und Expansion erlauben und damit die beschleunigte Herstellung von expandierten Artikeln in einem Maße ermöglichen, wie es bisher nicht möglich war.

Die erfindungsgemäßen Massen haben den Vorteil, dass sie aufgrund der erhöhten Einmischbarkeit Von Magnetit (C) eine Einstellung der Dichte nicht nur auf schaumtypische spezifische Gewichte (um 0,2 bis 0,5 Gramm pro Kubikzentimeter), sondern bis auf das Vierfache der Schaum-Ausgangsdichte erlauben, was mit anderen im Elastomerbereich verwendeten Füllstoffen nicht möglich ist. Es können also schwere, "wertige" Schäume mit neuartigen Dämpfungs- und Dämmungseigenschaften erhalten werden.

Die erfindungsgemäßen siliconhaltigen Massen haben den Vorteil, dass durch die Variation des Mischungsverhältnisses von mehreren morphologisch unterschiedlichen mikrowellenaktiven Füllstoffen eine Abdeckung großer Frequenzbänder möglich ist, so dass Mikrowellen-Vulkanisation und Expansion in weiten Grenzen aufeinander abstimmbar sind.

Die erfindungsgemäßen Massen haben des weiteren den Vorteil, dass die expandierten vernetzten Massen am Elastomer-Endprodukt auch bei hohen Anteilen an mikrowellenaktiven Füllstoffen keine wesentliche Verschlechterung von mechanischen oder anderen physikalischen Eigenschaften im Vergleich zu ungefüllten expandierten Massen zeigen. Die Beständigkeit gegenüber Heißluft und Chemikalien ist sogar eher verbessert.

Die erfindungsgemäßen Massen haben des weiteren den Vorteil, dass ihre expandierten Vulkanisate mit ausschließlich Magnetit als mikrowellenaktivem Füllstoff sowie lebensmittelzugelassenen Treibmitteln im direkten Kontakt mit Lebensmitteln verwendet werden können, so dass keine aufwändigen zusätzlichen Beschichtungen oder Träger, wie z.B. Aluminium, verwendet werden müssen, um direkten Kontakt zu vermeiden.

Die erfindungsgemäßen Massen haben des weiteren den Vorteil, dass ihre expandierten Vulkanisate eine komplett homogene Schaumstruktur und damit komplett homogene Eigenschaften auch über sehr große Wandstärken (größer 5 cm) -und dies bei geschlossener, glatter Oberfläche- aufweisen, was bisher nicht zu realisieren war.

Die erfindungsgemäßen Massen haben des weiteren den Vorteil, dass sie durch geeignete Steuerung der Strahlung gezielt schäumbar sind, d.h. es ist erstmals die Erzeugung echter Integralschäume (d.h. innen grobporig, außen kompakt expandiert) mit Siloxan-haltigen Massen möglich (durch die Wärmeeinwirkung von Außen trat bisher der umgekehrte Fall ein!). Die Expansion kann Wattzahl-abhängig in Richtung der Strahlungseinwirkung gezogen werden, so dass auch das defektfreie Ausschäumen komplizierter Geometrien möglich ist.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.
1) Herstellung einer Mikrowellen-schäumbaren und - vulkanisierbaren Siliconmasse, welche für den Kontakt mit Lebensmitteln geeignet ist und gut wärmeisolierend wirkt (z.B. für Backblechauflagen, Topfisolierungen), sowie Vulkanisation und Expansion derselben:
   In einem Kneter werden bei Raumtemperatur 100 Teile eines Poly(dimethyl)methylvinylsiloxans vorgelegt. Bei einer Temperatur von 80°C werden portionsweise 2 Teile eines Polydimethylsiloxans und 15 Teile hochdisperse Kieselsäure (HDK) zugegeben und nach jedem Zugabeschritt 10 min geknetet. Anschließend wird nochmals 3h bei 160°C geknetet und ausgeheizt. Dann werden bei Raumtemperatur portionsweise 10 Teile Magnetit mit einer mittleren Korngrösse von 150 µm zugegeben und geknetet. Anschließend werden 3 Teile eines Silazans und 1 Teil Wasser zugegeben und die Mischung bei 70°C für 1h geknetet.
   Nach Abkühlen wird die Mischung entnommen und auf der Walze oder im Kneter mit Vulkanisationsadditiven für die platinkatalysierte Additionsvernetzung sowie 1 Teil Natriumpyrophosphat-Hydrat und 1 Teil Natriumcarbonat-Hydrat (Merck KgAA) versehen.
   Die Fertigmischung wird in einem Extruder zu einem Vorformling stranggepresst und dieser in einer haushaltsüblichen Mikrowelle bei 500 Watt 5 Minuten der Strahlungseinwirkung ausgesetzt; anschließend wird in der Mikrowelle für 5 Minuten abgekühlt. Das hergestellte Teil der ungefähren Mikroshore-Endhärte von 40 ist homogen durchgeschäumt mit geschlossener Oberflächenhaut und weist eine Dichte von 0,7 g/cm³ und einen Wärmeübergangswert (lambda-Wert) von 0,04 (d.h. isolierend) auf.
2) Herstellung einer hoch mikrowellenaktiven schnell vernetzbaren Siliconmasse für weiche und dennoch überschwere Schaumplatten sowie Herstellung derselben:
   In einem Kneter werden bei Raumtemperatur 100 Teile einer Siliconmischung bestehend aus 90% eines Polydimethyl(vinyl)siloxans mit einem ungefähren Molgewicht von 1500 und 10 Teilen einer Kieselsäure mit einer BET-Oberfläche von ca. 200 m²/g mit 300 Teilen mit in einem geschlossenen Kneter Silazan-behandelten Magnetit vermengt und die Mischung bei 70°C für 1h geknetet. Nach Abkühlen wird die Mischung entnommen und auf der Walze mit 0,7 Teilen des Peroxids ELASTOSIL® AUX Vernetzer E (2,4-Dichlorbibenzoylperoxid, 98%ig) und 6 Teilen gasgefüllten Thermoplasthohlkugeln (z.B. Polyacrylnitril/Isobutan) versetzt. Nach Strangpressen aus einer Breitschlitzdüse wird die Rohkautschukplatte mit Hilfe von positionierbaren Mikrowellenstrahlern auf einem Teflon-Transportband kontinuierlich expandiert und geschäumt.
   Die erhaltenen Platten weisen eine geschlossene, glatte Oberfläche und eine Dichte von 2,2 g/cm³ bei einer Mikroshorehärte von 25 auf.
3) Herstellung in geschlossener Form eines homogen geschäumten Teils mit hoher Wandstärke (z.B. eines Schaum-Balls):
   Die wie unter 1) hergestellte Mischung wird zur Abtrennung von Luftbeimengungen ebenfalls stranggepresst. Die Vorformlinge werden so abgewogen, dass die Hälfte des Volumens der Kavität (Formnest) mit einer angenommenen Dichte von 1 erzielt wird (also 150 Gramm bei einem Nestvolumen von 300 cm³). Die Vorformlinge werden in die Formnester eingelegt, und die geschlossene Form (aus nicht mikrowellenaktivem, ausreichend temperaturbeständigen Kunststoff, wie z.B. PEEK) wird in einer Industriemikrowelle (wie sie z.B. zur Rücktrocknung von Emulsionen eingesetzt wird) 5 Minuten mit Strahlung bei einer Leistung von 600 Watt beaufschlagt.
   Die nach Entformung erhaltenen Schaum-Formteile sind homogen durchgeschäumt bei geschlossener Oberfläche und weisen eine Mikroshorehärte von 35 sowie eine Dichte von 0,65 g/cm³ auf.

## Patentansprüche

1. Zusammensetzung aufweisend:
(A) Zumindest eine Verbindung, die organische Reste aufweist, die zur Vernetzung geeignet sind,
(B) zumindest ein Treibmittel, das bei Erwärmung Gas, Dampf oder Rauch freisetzt, Kristallwasser oder Interchalatwasser aufweist,
(C) Magnetit.

2. Zusammensetzung nach Anspruch 1, **dadurch gekennzeichnet, dass** die Verbindungen, die organische Reste aufweisen, die zur Vernetzung geeignet sind, aliphatische Kohlenstoff-Kohlenstoff-Mehrfachbindungen aufweisen.

3. Zusammensetzung nach Anspruch 1 oder 2, **dadurch gekennzeichnet, dass** die Verbindungen, die organische Reste aufweisen, die zur Vernetzung geeignet sind, Organosiliciumverbindungen sind.

4. Zusammensetzung nach einem oder mehreren der Ansprüche 1 bis 3, **dadurch gekennzeichnet, dass** die Verbindungen, die organische Reste aufweisen, die zur Vernetzung geeignet sind, peroxidischvernetzende, schwefelvernetzende, bisphenolvernetzende oder platinkatalysiert additionsvernetzende organische Verbindungen sind.

5. Zusammensetzung nach Anspruch 1, **dadurch gekennzeichnet, dass** das Treibmittel, das bei Erwärmung Gas freisetzt, ein Alkaliphosphat ist.

6. Formkörper, **dadurch gekennzeichnet, dass** er eine Zusammensetzung nach einem oder mehreren der Ansprüche 1 bis 5 aufweist.

## Claims

1. Composition comprising:
(A) at least one compound which has organic radicals which are suitable for crosslinking,
(B) at least one blowing agent which releases gas, vapor or fume on heating and which contains water of crystallization or intercalated water,
(C) magnetite.

2. Composition according to Claim 1, **characterized in that** the compounds which have organic radicals suitable for crosslinking have aliphatic carbon-carbon multiple bonds.

3. Composition according to Claim 1 or 2, **characterized in that** the compounds which have organic radicals suitable for crosslinking are organosilicon compounds.

4. Composition according to one or more of Claims 1 to 3, **characterized in that** the compounds which have organic radicals suitable for crosslinking are peroxidically crosslinking, sulfur-crosslinking, bisphenol-crosslinking, or platinum-catalyzed-addition-crosslinking organic compounds.

5. Composition according to Claim 1, **characterized in that** the blowing agent which releases gas on heating is an alkali metal phosphate.

6. Molding, **characterized in that** it comprises a composition according to one or more of Claims 1 to 5.

## Revendications

1. Composition comportant :
(A) au moins un composé qui comporte des radicaux organiques qui sont appropriés à la réticulation,
(B) au moins un agent d'expansion qui au chauffage libère un gaz, de la vapeur ou de la fumée, et qui comporte de l'eau de cristallisation ou de l'eau d'intercalation,
(C) de la magnétite.

2. Composition selon la revendication 1, **caractérisée en ce que** les composés qui comportent des radicaux organiques qui sont appropriés à la réticulation comportent des liaisons multiples carbone-carbone aliphatiques.

3. Composition selon la revendication 1 ou 2, **caractérisée en ce que** les composés qui comportent des radicaux organiques qui sont appropriés à la réticulation sont des composés organosiliciés.

4. Composition selon une ou plusieurs des revendications 1 à 3, **caractérisée en ce que** les composés qui comportent des radicaux organiques qui sont appropriés à la réticulation sont des composés organiques réticulables à l'aide de peroxydes, réticulables à l'aide de soufre, réticulables à l'aide de bisphénol ou réticulables par addition catalysée avec du platine.

5. Composition selon la revendication 1, **caractérisée en ce que** l'agent d'expansion qui au chauffage libère un gaz est un phosphate de métal alcalin.

6. Corps moulé, **caractérisé en ce qu'**il comporte une composition selon une ou plusieurs des revendications 1 à 5.
